# EUROPEAN PATENT SPECIFICATION

(11) **EP 3 519 537 B1**
(45) Date of publication and mention of the grant of the patent: **23.03.2022**
(21) Application number: 17854301.3
(22) Date of filing: 29.09.2017
(51) Int. Cl.: C10J 3/84, C10J 3/06, C10J 3/24, C10J 3/40, C10J 3/26, C10J 3/82, C10J 3/36, C10J 3/72

(54) **PROCESS FOR CONVERTING CARBONACEOUS MATERIAL INTO LOW TAR SYNTHESIS GAS**
VERFAHREN ZUR UMWANDLUNG VON KOHLENSTOFFHALTIGEM MATERIAL IN SYNTHESEGAS MIT NIEDRIGEM TEERGEHALT
PROCÉDÉ DE CONVERSION DE MATIÈRE CARBONÉE EN GAZ DE SYNTHÈSE À FAIBLE TENEUR EN GOUDRONS

(30) Priority: 29.09.2016 US 201662401711 P; 30.01.2017 US 201715419722
(43) Date of publication of application: 07.08.2019
(73) Proprietor: Expander Energy Inc., Calgary, Alberta T2W 4X9 (CA); Air Technic S.R.O., 160 00 Praha 6 (CZ)
(72) Inventor: KRESNYAK, Steve, Calgary, Alberta T2Y 5B2 (CA); ZÁHORÍK, Pavel, 150 00 Praha 5 (CZ)
(74) Representative: Studio Torta S.p.A.
(86) International application number: PCT/CA2017/051161
(87) International publication number: WO 2018/058252

(56) References cited:
- WO-A1-2015/090251
- WO-A1-2015/090251
- CZ-U1- 28 354
- CZ-U1- 28 354
- FR-A1- 2 569 715
- US-A1- 2015 240 172

## Description

### FIELD OF THE INVENTION

The present invention pertains to the field of gasification of carbonaceous feedstock/fuel, and in particular to a process and system for conversion of carbonaceous fuel materials into clean high quality syngas substantially devoid of tars and for the production of clean ash substantially devoid of carbon content.

### BACKGROUND

Gasification can convert carbon-containing materials to useful chemical products. These chemical products typically involve synthesis gas (syngas), which can be further combusted to produce electricity, or chemically reacted to produce oxygenates or hydrocarbons in catalytic systems.

Several types of gasification and pyrolysis methods and apparatuses have been developed to achieve efficient conversion of biomass into clean gaseous products. Many of the gasification processes known in the art have failed due to insufficient attention to low tar production, efficient tar destructions, and full decarbonization of char and ash.

Existing downdraft gasifiers require very high quality wood fuels or biomass, such as ash free wood blocks or high quality wood chips, and cannot be scaled up to economically attractive scales without severely increased tar production. Multi-stage downdraft gasifiers which comprise separate zones for fuel pyrolysis, partial oxidation, and reduction of bed gas, have also been developed, however such gasifiers known in the art also result in substantial amount of tar production, significant tar levels retained in the syngas, and the ash containing very high levels of unconverted carbon content

CZ Patent No. 295171 discloses a three zone biomass gasifier comprising vertically oriented mutually nested cylindrical containers defining drying chamber, distillation chamber and a combined reduction & combustion chamber, respectively. The gasifier is configured such that the gaseous mixture being generated in the chamber drying and distillation chambers can be exhausted, and introduced through a bypass into the combined reduction/combustion chamber for additional burn, and reduction to desired components of the gas. This gasifier is structurally complicated, and is known for its poor controllability and flexibility of performance.

PCT Publication No. WO 2015/090251 discloses a device for the multi-stage gasification of carbonaceous fuels, which comprises a hermetically sealed vertical container which is fitted with insulation. Inside vertical container is pyrolysis chamber which is adapted for filling with carbonaceous fuel from above of the container. Under pyrolysis chamber is provided a partial oxidation chamber for oxidation of the pyrolysis product which is delimited by a refractory casing and the partial oxidation chamber is followed by a reduction zone for chemical reduction of oxidized product gas.

The devices/systems as disclosed in CZ 295,171 and WO 2015/090251, result in considerable amount of tar in the product gases, which in turn clogs the cleaning devices used to clean the product gases. Further these systems have no means to effectively manage the reduction reaction and failed to produce consistent flow and quality of syngas.

For example, in the system described in WO 2015/090251, the residues obtained after pyrolysis and/or oxidation steps flow down, and collects at the bottom of the gasifier to form a reduction bed. As it well known in the art that pyrolysis/oxidation make an uneven/non-uniform bed due to the angle of repose of the falling material. The height difference between the center portion and the peripheral portion of such beds is so large that the pressure loss of gases passing through the bed have negative impact and an effective endothermic reaction cannot be achieved to increase the caloric value of produced gas.

CZ 28354 discloses a downdraft gasifier, comprising vertically stacked pyrolysis chamber, oxidation chamber and reduction chamber, wherein an attempt was made to improve the quality for produced syngas by providing a homogenizer on the floor of the reduction chamber. However, this arrangement also fails to provide a char bed of uniform depth and promotes channeling of the syngas, and leads to undesirable results.

WO 2016/075362 discloses a method and apparatus for gasifying raw material in an attempt to form low tar gaseous products, wherein the raw material is pyrolyzed in the presence of pyrolysis air to form a pyrolysis product, the pyrolysis product is then moved to a lower part of the gasifier, wherein a primary air is introduced countercurrently to the lower part, followed by carrying out a final gasification in a lower part of the gasifier in order to form a gasified gas. The gasified gas is then introduced into a catalytic oxidation part and through a catalyst layer of the catalytic oxidation part, and reforming the gasified gas by means of the catalytic oxidation in the presence of reforming air in the catalytic oxidation part, in order to form a gaseous product. This reference does not mention any means to effectively manage the reduction reactions, and would fail to produce consistent flow and quality of produced gas.

Therefore, a need exists for a process and system for gasification of carbonaceous material to form consistent clean product gases, such as syngas, while substantially reducing tar contents.

FR 2569715 discloses a sawdust gasifier, consisting of a vertical vessel pierced in the middle and equipped with two concentric cones, a horizontal aeration system, protection for the nozzle, and a vertical grid; a burner for preheating and maintenance of combustion. The gasifier is designed to permit the incineration of resinous sawdust and the production of transported heat. This reference also does not mention any means to effectively manage the reduction reactions, and would fail to produce consistent flow and quality of produced gas.

This background information is provided to reveal information believed by the applicant to be of possible relevance to the present invention. No admission is necessarily intended, nor should be construed, that any of the preceding information constitutes prior art against the present invention.

### SUMMARY OF THE INVENTION

An object of the present invention is to provide a process for converting carbonaceous fuel material into low tar syngas.

In accordance with an aspect of the present invention, there is provided a continuous multi-stage vertically sequenced gasification process for conversion of solid carbonaceous fuel material into low tar syngas as claimed in claim 1.

In accordance with an aspect of the present invention, there is provided an apparatus for a continuous multi-stage vertically sequenced gasification process for conversion of solid carbonaceous fuel material into low tar syngas as claimed in claim 13.

### BRIEF DESCRIPTION OF THE FIGURES

Figure 1 is a schematic drawing depicting the system in accordance with an embodiment of the present invention.
Figure 2 is a schematic drawing depicting the oxidation and the reduction zones of a system in accordance with one embodiment of the present invention
Figure 3 is a schematic drawing depicting the oxidation and the reduction zones of a system in accordance with one embodiment of the present invention.
Figure 4 is a schematic drawing depicting the oxidation and reduction zones of a prior art gasifier and the process;
Figure 5 is a schematic drawing depicting the oxidation and reduction zones of another prior art gasifier and the process;

### DETAILED DESCRIPTION OF THE INVENTION

### Definitions

As used herein, the term "about" refers to a +/-10% variation from the nominal value. It is to be understood that such a variation is always included in a given value provided herein, whether or not it is specifically referred to.

The term "hydrocarbon material" used herein includes hydrocarbons such as methane, and other hydrocarbon containing material obtained by pyrolysis of a fuel, which is commonly referred to as tars, or organic tars, or bio tars.

The term "char" used herein includes a solid material that remains after light gases and tar have been driven out, or released from a carbonaceous material during the initial stage of biomass decomposition, which is known as carbonization, charring, devolatilization or pyrolysis.

Unless defined otherwise, all technical and scientific terms used herein have the same meaning as commonly understood by one of ordinary skill in the art to which this invention belongs.

In one aspect of the present invention, there is provided a continuous multi-stage vertically sequenced gasification process for conversion of solid carbonaceous fuel material into clean (low tar) syngas in a gasifier comprising a pyrolysis zone, a partial oxidation zone located vertically downstream of the pyrolysis zone, and a reduction zone located vertically downstream of the partial oxidation zone and comprising a sloped perforated floor/base, one or more openings located radially inwardly of the perforated floor, and a centrally located deflector. The floor is sloped downward and inward toward the one or more openings, wherein the perforated floor is configured, by sizing of perforations therein, to primarily allow passage of syngas therethrough, and to inhibit passage of the pyrolysis residue obtainable in the pyrolysis zone.

The process of the present invention is carried out by feeding the carbonaceous fuel material through the upper portion of the pyrolysis zone vertically downward towards the lower portion of the pyrolysis zone, while pyrolyzing the fuel into pyrolysis vapours comprising hydrocarbons such as methane and tar, and raw pyrolysis residue comprising char, ash and carbon. A first oxidant is optionally added to the lower portion of the pyrolysis zone to achieve a temperature greater than 200 °C.

The pyrolysis vapours are directed to the partial oxidation (POX) zone, and the pyrolysis raw residue formed in the pyrolysis zone is directed downwardly to the reduction zone via a separation member positioned between the pyrolysis zone and the partial oxidation zone. The separation member comprises a plurality of upwardly angled vents to allow the pyrolysis vapours only into the partial oxidation zone. A second oxidant is then added in the partial oxidation zone to achieve a temperature greater than 900 °C to reform the pyrolysis vapours into raw syngas containing significantly reduced levels of tar.

A bed of pyrolysis residue having a uniform depth is formed on the floor/base of the reduction zone, and the raw syngas primarily formed in the partial oxidation zone and optionally in the pyrolysis zone is passed downward through the pyrolysis residue bed to carry out an endothermic reaction between CO₂ and H₂O in the syngas and carbon of the char in the pyrolysis residue bed, while controlling the reduction zone pressure drop, resident time and syngas flow space velocity during the endothermic reaction to form substantially tar free raw syngas, to reduce carbon content in the pyrolysis residue, thereby forming a decarbonized pyrolysis residue. This step can also reduce the temperature of raw syngas as compared to the temperature of the partial oxidation zone. The substantially tar free enhanced syngas is then moved in upward counter-current flow in indirect thermal contact with the pyrolysis zone, to heat the pyrolysis zone and subsequently cool the substantially tar free syngas before collecting same.

In some embodiments of the present invention, the process is carried out under pressure, preferably up to full vacuum, partial vacuum and less than 42,4 bar (600 psig), more preferably between partial and 7,9 bar (100 psig).

In some embodiments, the first and second oxidants independently comprise air, enriched air, oxygen with purity greater than 85wt%, oxygen with purity greater than 95wt%, or a combination thereof. In some embodiments, the first oxidant and/or the second oxidant further comprises H₂O (steam) and/or CO₂.

In some embodiments, the first oxidant and the second are same. In some embodiments, the first oxidant and the second are of different compositions.

In some embodiments, the first oxidant comprises air, enriched air, oxygen with purity greater than 85wt%, oxygen with purity greater than 95wt%, or a combination thereof, and the second oxidant comprises at least one of air, enriched air, oxygen with purity greater than 85wt%, oxygen with purity greater than 95wt%, premixed with H₂O and/or CO₂.

In some embodiments of the process of the present invention, the syngas composition formed has a H₂:CO ratio from about 0.5:1 to about 1.5:1, preferably about 0.8:1 to about 1:1.

In some embodiments of the process of the present invention, the carbonaceous fuel material comprises biomass fuel selected from wood chips, railway tie chips, waste wood, forestry waste, sewage sludge, pet coke, coal, Municipal Solid Waste (MSW), Refuse-derived Fuel (RDF), or any combination.

In some embodiments of the process of the present invention, the biomass fuel is formed by a chipping, shredding, extrusion, mechanical processing, compacting, pelletizing, granulating, or crushing process. In some embodiments, the biofuel sprayed with, coated with or impregnated with liquid or solid carbonaceous materials is used.

In some embodiments of the process of the present invention, the POX stage temperature is greater than 1250 °C, or greater than the ash fusion temperature to create liquid slag.

In some embodiments of the present invention, the process further comprises adding an additional slag separation chamber to remove and quench the liquid slag to form a non-leachable by-product for safe disposal.

In some embodiments of the present invention, the process further comprises processing and cooling the tar free syngas to be used for electric power generation and chemical production, such as methanol, DME gasoline, and Fischer Tropsch liquids, such as syndiesel, synthetic jet fuel and synthetic wax.

The process of the present invention can be performed entirely in one chamber, or in separate chambers or a combination of chambers in a vertical configuration.

In another aspect of the present invention, there is provided an system for a continuous multi-stage vertically sequenced gasification process for conversion of solid carbonaceous fuel material into clean (low tar) syngas. The system of the present invention comprises a pyrolysis zone for converting the fuel into pyrolysis vapours comprising hydrocarbons and carbon rich raw pyrolysis residue comprising char and ash, a partial oxidation zone located vertically downstream of the pyrolysis zone for conversion of the hydrocarbons in the pyrolysis vapours into raw syngas comprising H₂, CO and CO₂, and an endothermic reduction zone located vertically downstream of the partial oxidation zone for converting the raw syngas into enhanced syngas and for reducing carbon content of the raw pyrolysis residue to obtain decarbonized pyrolysis residue.

In some embodiments of the system of the present invention, the pyrolysis zone, the partial oxidation zone and the reduction zone are contained within one container/chamber. In some embodiments, the pyrolysis zone, the partial oxidation zone and the reduction zone are contained in separate chambers arranged in a vertical configuration.

In some embodiments, the lower portion of the pyrolysis zone has a perimeter greater than that of the upper portion. In some embodiments, the pyrolysis zone has a gradually increasing perimeter towards the lower portion.

In some embodiments of the invention, any or all portions walls of chamber defining the pyrosylsis zone slope slightly and/or gradually outward from the top of the biomass fill level to the lowest point where reduced amount of char is present, where the bottom of the chamber is larger in area/perimeter than the top of the chamber. This allows the biomass material to advance without holdup and bridging, which further provides for continuous stable flow of advancing biofuel and produced syngas.

A separation member is positioned between the pyrolysis zone and the partial oxidation zone. The separation member comprises a plurality of upwardly angled vents or openings to allow the pyrolysis vapours into the partial oxidation zone and to inhibit passage of the raw pyrolysis residue therethrough. The separation member is also configured to direct the raw pyrolysis residue into the reduction zone. The system further comprises an outlet port for the decarbonized pyrolysis residue, positioned downstream of the reduction zone, and an outlet for the enhanced syngas positioned after the reduction zone.

In some embodiments, the separation member is an inverted or inclined hemispherical or conical ceramic heated membrane.

The separation member physically supports the downwardly advancing fuel during pyrolysis, to direct the advancement of the raw pyrolysis residue comprising char and ash towards the reduction zone, and heat the final stages of the pyrolysis zone.

The reduction zone is configured to form a bed of the pyrolysis residue having a uniform height/depth and radial width. The reduction zone is provided with a sloped perforated floor, one or more openings located centrally of the perforated floor, and a centrally located deflector. The deflector can be of any size and shape, such as square, rectangular, conical or cylindrical.

The floor in the reduction zone is sloped downward and inward toward the one or more openings, and configured by sizing of perforations therein, to allow primarily passage of the raw syngas therethrough and towards the outlet for the enhanced syngas, and to inhibit passage of the raw pyrolysis residue. The one or more openings are placed in fluidic communication with the outlet port to allow passage of the decarbonized pyrolysis residue therethrough.

The slope of the floor is greater than 0° to greater than the angle of material repose of the raw pyrolysis residue. In some embodiments, the slope of the perforated floor is from 30% less than to 30% more than the natural angle of repose of the pyrolysis residue. In some embodiments, floor slope approximates natural angle of repose of the pyrolysis residue.

The slope of the perforated floor is between 0° to 60°. In some embodiments, the angle of the perforated floor is about 30° to about 40°.

In some embodiments, the reduction zone is further provided with a first mechanism, configured to intermittently or continuously move pyrolysis residue from the perforated floor towards the one or more openings. In some embodiments, the mechanism comprises one or more pushing body configured to move along a path around the deflector, the pushing body located proximate to the perforated floor and outward from the one or more openings. In some embodiments the pushing body comprises one or more arms extending radially outwardly from the one or more openings. In some embodiments the radial arms have an angled face configured to contact and push a portion of the pyrolysis residue toward the one or more openings during motion of the pushing body. In some embodiments, the mechanism is configured to move a given distance along the path.

In some embodiments, the mechanism is associated with a controller configured to operate the mechanism depending on a pressure differential measured at a location before the pyrolysis residue bed and a location after the perforated floor.

In some embodiments, the reduction zone further comprises a second mechanism operable to push the decarbonized pyrolysis residue from the lower portion of a bed thereof toward the outlet ports.

In some embodiments, the first and second mechanisms are operable independently of each other. In some embodiments, the first and second mechanisms are integral.

In some embodiments of the invention, the system further comprises an outer shell having a shell inlet in communication with the syngas outlet, and a shell outlet, wherein the outer shell encircles/surrounds the pyrolysis zone, the partial oxidation zone and the reduction zone to form a channel for flow of the syngas toward the shell outlet. In some embodiments, the shell outlet is provided on an upper portion of the shell to allow the syngas to move upward in the channel to provide indirect thermal contact between the syngas and the pyrolysis zone.

In some embodiments of the system of the present invention, the pyrolysis zone, the partial oxidation zone and the reduction zone are comprised within separate containers/chambers.

Further details relating to the system and the process of the present invention are discussed with references to the figures.

### System and Apparatus

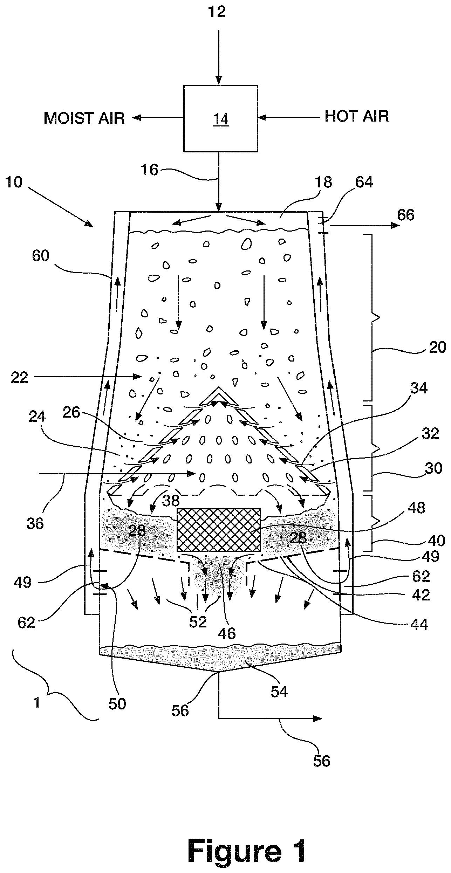

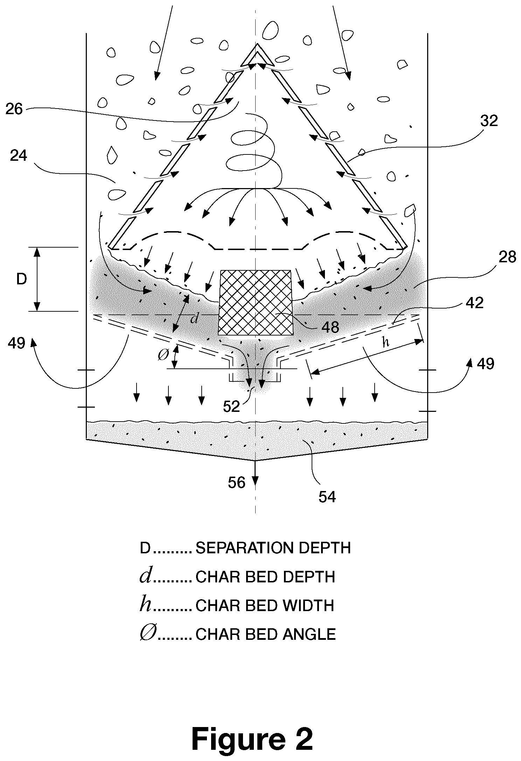

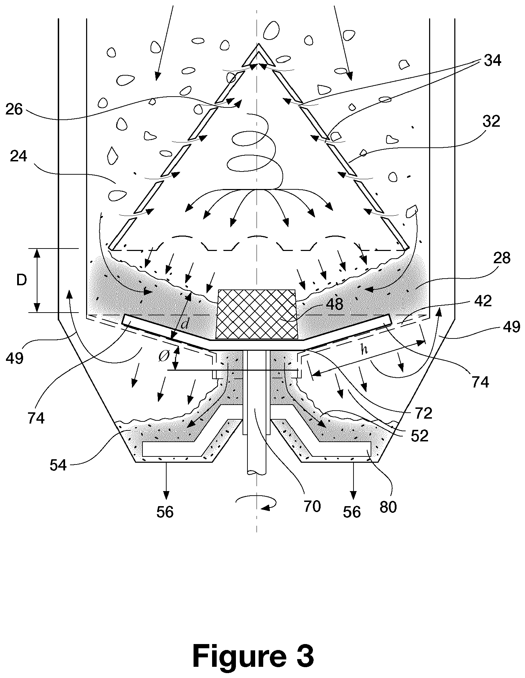

Figure 1 illustrates simplified schematic diagram showing the general configuration of a system for a continuous multi-stage vertically sequenced gasification process for conversion of solid carbonaceous fuel material into clean (low tar) syngas. Figures 2 and 3 illustrate simplified diagram showing componets of the system of the present invention.

Referring to Figure 1, the system (1) comprises vertically sequenced pyrolysis zone (20), partial oxidation (POX) zone (30) and reduction zone (40) within an elongated chamber (10). The Pyrolysis zone (20) and POX zone (30) are separated by a separation member (32), such as an inverted or inclined hemispherical or conical ceramic heated membrane. The separation member further comprises upwardly angled vents (34) to provide a separation means for the pyrolysis vapours, whereby the pyrolysis vapours (26) are directed into the POX zone, while rising upward in the POX zone, and to inhibit passage of the pyrolysis residue (24) therethrough, while directing same to the reduction zone. The angle of the vents can be any angle between substantially horizontal to substantially vertical.

The reduction zone (40) comprises a sloped perforated floor/base (42), one or more one or more openings (46) located centrally relative to the perforated floor, and a centrally located deflector/diffuser (48). The floor is sloped downward and inward toward the one or more openings, and configured by sizing of perforations (44) therein, to allow primarily passage of the raw syngas therethrough towards the outlet (50) for the enhanced syngas (49) and to inhibit passage of the raw pyrolysis residue, and the one or more openings (46) are in fluidic communication with the outlet port (56), and configured to allow passage of the decarbonized pyrolysis residue (52) therethrough towards the outlet port (56).

As shown in Figure 2, the perforated floor/base is spaced at a distance (D) from the separation member, such that the raw pyrolysis residue comprising raw ash/char (24) falling from the pyrolysis zone, is directed by gravity to effectively accumulate on the sloped perforated floor to form char bed (28) having a desired uniform depth (d), (wherein the value of "d' is equal to or less than "D") and a desired uniform radial width "h".

The slope of the floor (θ) is greater than 0° to greater than the angle of material repose of the raw pyrolysis residue, or from 30% less than to 30% more than the natural angle of repose of the pyrolysis residue. In some embodiments, floor angle approximates the natural angle of repose of the pyrolysis residue.

In the embodiment depicted in Figure 1, the chamber defining the pyrolysis zone, the POX zone and the reduction zone are surrounded by a shell (60) having a shell inlet (62) at the lower portion, in fluidic communication with the enhanced syngas outlet (50) provided downstream of the pyrolysis bed (28), a shell outlet (64) in its upper portion, wherein the shell inlet (62) receives the enhanced syngas (49) from the syngas outlet (50), and the shell forms a channel for flow of the syngas upward toward the shell outlet (64).

Figure 3 shows an example wherein the reduction zone of the system comprises a first mechanism (70) comprising a pushing body (72) comprising two or more arms (74) extending radially outwardly relative to the opening (46) to intermittently or continuously move pyrolysis residue from the perforated floor (42) towards the opening (46). The system also comprises a second mechanism (80) operable to push the decarbonized pyrolysis residue (52) from a lower bed (54) toward the outlet ports (56).

### GASIFICATION PROCESS

### STAGE 1: Pyrolysis reaction in Zone (20)

With reference to Figure 1, carbonaceous fuel material/biofuel (12/16) is fed at the top portion (18) of the pyrolysis zone at approximately 50 °C to 100 °C and the pyrolysis process is started by gradually heating pyrolysis zone to more than 100 °C, preferably greater than 200 °C, more preferably greater than 400 °C, where pyrolysis vapours (26) (primarily methane (CH₄), hydrogen and tar) and raw pyrolysis residue (24) comprising ash and char are formed while, advancing vertically by gravity downward. The first oxidant (22), which may be pure or mixed oxidant, is optionally added to the lower to mid portion of the pyrolysis zone (20) to control the temperature of the zone and advance the pyrolysis biomass reduction process. The pyrolysis reaction is shown in scheme below.

BioFuel + heat energy + optional oxidant → H₂ + CH₄ + CO₂ + char + tar

The pyrolysis vapours generally contain relatively high portion of volatile tars derived from the pyrolysis process, which normally causes significant plugging and fowling problems if condensed and cooled in downstream systems, resulting in very low gasifier reliability and on-stream performance.

As the carbonaceous fuel material/biofuel advances vertically towards the lower portion of the vertical pyrolysis zone (20), the fuel will reduce by more than 70% weight to char or commonly known as "wood coal" with significantly lower density than the feed biofuel. The vertical configuration with increasing perimeter, disclosed in the present application allows gravity to drive the biofuel consistently and uniformly advance vertically through the pyrolysis stage. This inherently provides for stable and consistent production of syngas.

The pyrolysis residue (24) is advanced by gravity downward and distributed to the outer region of the heated membrane, and fall through horizontal gaps in the outer periphery of the membrane, vertically down to form a pyrolysis residue bed (28) in the endothermic reduction zone. The ceramic membrane is typically suitable for continuous maximum operating temperature of greater than 2000 °C (3600 °F).

A suitable rotating mechanical spreader (not shown) can be placed at the surface (18) of the pyrolysis zone (20) to evenly spread the biomass feed (16) into the top of the pyrolysis zone. The equal or even height of the biomass allows the reducing biomass to flow consistently and stably through pyrolysis stage and produce a very desirable stable flow of syngas.

### STAGE 2: Partial Oxidation (POX) in Zone (30)

A second oxidant (36), pure or mixed, is added below the heated membrane (32) in the POX zone (30), to create a partial oxidization temperature of greater than 900 °C, more preferred greater than 1000 °C, up to 1250 °C for non-slagging, and greater than 1250 °C or an ash fusion temperature for slagging. Pyrolysis vapours (26) pass through upwardly angled vents (34) from pyrolysis zone and are partially oxidized with the second pure oxidant to reform the pyrolysis vapours to raw syngas (38) consisting primarily of CO, CO₂ and H₂, with lower concentrations of CH₄, and inerts such as N₂, and Ar, and significantly reduced concentrations of tar. The composition of inerts in the raw syngas (38) is dependent primarily on composition and quality of oxidant.

The pure or mixed oxidant can be air (containing nitrogen), enriched air (containing lower portion of nitrogen), O₂ of relatively high purity ( > 85 wt% O₂, preferably greater than 95 wt% and more preferrably greater than 98 wt% to avoid inefficient inert purging), air or O₂ mixed with CO₂ and or steam (H₂O). The CO₂ and H₂O can be premixed with second oxidant and used in POX zone to control temperature if O₂ or enriched air is used. External methane CH₄ can also be mixed into oxidant to add heat energy to control POX zone temperature if needed.

### STAGE 3: Endothermic Reduction in Zone (40):

With the uniform pyrolysis residue bed (28) having uniform depth (d) and width (h), the raw syngas flow space velocity is consistent and pressure drop is low and consistent, to maximize the benefits and effect of the endothermic reaction in the reduction zone. Raw syngas vapours (38) rich in CO₂ and/or steam (H₂O) and containing a reduced concentration of tars passes in contact with the uniform hot bed (28) of carbon rich ash/char whereby following reactions occur to form enhanced syngas gas (49):

| | |
|---|---|
| C + CO₂ → 2CO | (1) ΔH = +13.369 kJ/kg |
| C + H₂O → CO + H₂ | (2) ΔH = +9.846 kJ/kg |

The high temperatures of the POX raw syngas carries sufficient physical enthalpy, CO₂ and/or H₂O to drive the endothermic carbonization reactions. Higher feed concentrations and varied amounts of CO₂ and steam (H₂O) can be added to the second oxidant in stage 2 to optimize the reactions (1) and (2) in stage 3 and maximize carbon conversion from the char. Feed levels of CO₂ and H₂O greater than the stoichiometric levels, can also be added to the oxidant to cool the temperature of the POX zone to below 1250 °C, if the oxidant used is concentrated O₂, with low or no levels of N₂.

The raw syngas (38), containing reduced level of tars at a temperature greater than 900 °C, is directed vertically downward through the evenly distributed char bed (28) in the reduction zone. This results in the following very desirable benefits;
1. Raw syngas is cooled by endothermic reactions (1) and (2) to a temperature less than the temperature of the POX zone. In some embodiments, the temperature of enhanced syngas leaving the reduction zone is about 600 °C or less.
2. Raw syngas is scrubbed substantially clear of all remaining tars to form tar free enhanced syngas, eliminating all concerns of plugging or fowling of downstream equipment.
3. Higher quantity enhanced syngas is produced, improving the overall carbon conversion efficiency and cold gas efficiency of the process,
4. The clean enhanced syngas having greater calorific value is formed.
5. Raw ash or char is significantly reduced in carbon content forming decarbonized residue, and allowing same to be used safely as fertilizer or safe disposal.
6. Carbon content of ash can further be regulated by reducing residence time in stage 3, to intentionally produce an ash with carbon, well known as carbon ash used for the commercial production of briquettes, or bio-char fertilizer.

As shown in Figure 1, clean enhanced syngas (49), at about 600 °C and substantially free of all tars and solid particulates passes concentrically from the reduction/endothermic stage and rises vertically into channel formed by the shell (60), wherein heat energy from the syngas is indirectly counter-currently transferred in reverse vertical sequence to the pyrolysis stage, thereby further cooling the raw syngas and providing heat energy to the pyrolysis stage. The enhanced syngas exits the gasifier below 600 °C, more preferred between 500 °C to 600 °C. Any form of enhanced heat transfer configuration or means, know to those skilled in art, may be used to effect the maximum heat transfer process. Cooled enhanced syngas (66) is collected the top of the gasifier and is transferred for further cleaning and processing. The clean syngas, substantially free of all tars, can be used in engines to generate electric power and/or chemical production such as DME, Methanol, or Fischer Tropsch products such as syndiesel.

The inventors of the present invention have surprisingly found that the configuration of the separation member to direct the raw pyrolysis residue/char into the reduction zone, along with the presence of sloped perforated floor, one or more openings located inwardly/centrally relative to the perforated floor, and a centrally located deflector in the reduction zone, as described in the present application, results in the formation of a reduction bed of pyrolysis residue having a substantially uniform depth (d), and width (h), as depicted in Fig. 2.

The uniform bed provides the critical uniform pressure drop and flow distribution of the raw syngas from the pyrolysis zone over the entire residue or char bed which facilitates consistent flow and consistent quality of raw syngas and clean ash.

The uniform pyrolysis residue bed promotes an efficient endothermic reaction between CO₂ and H₂O in the syngas and carbon content in the pyrolysis residue, and by controlling the reduction zone residence time and syngas flow space velocity during the endothermic reaction with reduced risk of channeling, results in the formation of substantially tar free raw syngas, reduction of carbon content in the pyrolysis residue, and reduction in the temperature of raw syngas as compared to the temperature of the partial oxidation zone.

In some embodiments, the substantially tar free syngas comprises less than 200ppm of tar. In some embodiments tar is less than 100ppm, further in some embodiments, tar is less than 50ppm. In some embodiments, substantially tar free syngas comprises less than 10ppm of tar.

In the embodiment, when the Stage 2 temperature is operated above ash fusion temperature, typically above 1200 °C, then a liquid slag is formed, which can be separated, quenched and converted to vitrified solid which is non-leachable and safe to dispose in normal means. The ash, in whatever form, is removed from the gasifier and cooled for storage and disposal.

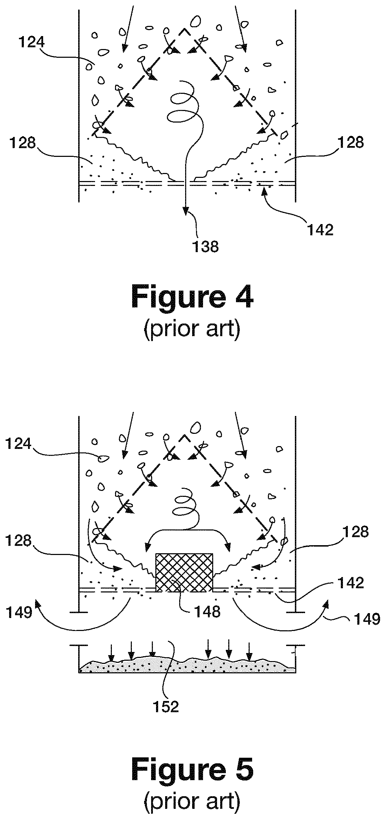

As depicted in Figure 4, in early prior art gasifiers having no deflector in the center of the reduction zone floor (142) resulted in the formation of uneven char bed (128). Due to very high angle of repose of the falling pyrolysis residue/char (124), the height difference between the central portion of the reduction bed and the peripheral portions is so large that the raw syngas simply channels through the path of lowest pressure drop and eliminates any reduction effect. As seen in Figure 4, for a critical amount of raw syngas (138) passing through the central area of the reduction bed, which represents most or all of the gas, the pressure loss of gas is significantly lower than the edge area, and the gas passing through this area would not be able to undergo the endothermic reaction to achieve the desired results of forming enhanced syngas and decarbonized pyrolysis reside.

Figure 5 depicts another prior art gasifier, which incorporates a homogenizing cylinder (148) in the center of the reduction zone floor. However, this arrangement also fails to provide a char bed of uniform depth and promotes channeling of the syngas with undesirable results. As seen in this figure, the raw pyrolysis residue (124) falls with substantial angle of repose to form an uneven bed (128), which also results in un-effective reduction reaction leading to poor quality syngas (149) and pyrolysis residue (152).

Typical feed streams (12) may include chipped, pelletized, shredded or mechanically processed wood, construction wood waste, coal, petcoke, forestry waste wood with or without green and bark material, solid sewage sludge, selected municipal solid waste (MSW), controlled refuse-derived fuel (RDF) containing specific compositions of plastic and biomass, agricultural waste, or any blended or combinations of above materials. The Heating Value of these materials range from 6978-13956 kJ/kg (3000-6000 BTU/lb) for MSW, to 16282 kJ/kg (7000 BTU/lb) for RDF, to 16282 kJ/kg (7000 BTU/lb) for wood chips, to 23260 kJ/ kg (10000 BTU/lb) for coal, to 30238 kJ/kg (13000 BTU/lb) for petcoke. In a further embodiment, the biomass fuel can be sprayed, coated with or impregnated with liquid or solid carbonaceous materials to enhance the gasifier process. All biomass feed materials (12) may contain moisture levels of 0 to 50wt% whereby waste heat from gasifier is used to dry materials to 5 to 15wt%, preferred to 10 to 12 wt% before being fed to gasifier. Integrated drying means (14) using excess low level heat energy from the Biomass Gasifier process increases the overall thermal efficiency of the unit. Moisture content of biomass may vary from summer to winter seasons. The biomass material is typically sized from +1mm to -100 mm, well known to those skilled in the art to facilitate favorable material handling and flowing properties.

The physical size or shape of each gasifier process stage and zone can vary and be adjusted by those skilled in the art and may or may not be physically the same for each stage. The key is that the stages and zones are configured in the correct sequence, or more preferred, correct vertical sequence to achieve the desired results as disclosed.

The biomass gasification process may be performed in separate vessels or groupings of vessels or more preferred, in a single vessel as long as the process sequence and vertical flow sequence is performed as disclosed to create the novel desired process performance.

The process may be operated at any pressure to accommodate the economic integration with the downstream processes or the biomass gasification process must be suitably equipped with syngas compression means. By way of example the process can be operated at slightly vacuum conditions to near atmospheric pressure for electric power generation applications, where a clean syngas booster blower fan is used to create 1,1-1,7 bar (1-10 psig) pressure to feed to the syngas engines driving electric generators. In another example, the biomass gasifier process may operate at 1,7 to 7,9 bar (10 to 100 psig) feeding syngas to a suitable gas compressor, well known by those skilled in the art, to boost the pressure to 21,7 to 35,5 bar (300 to 500 psig) to process in a Fischer-Tropsch unit for production of synthetic products, such as syndiesel.

Other features, such as various syngas cleanup unit operations, including unit operations such as a high efficiency, high temperature particulate separator or ceramic filter are added to remove fine particles from the raw syngas. These features may be integrated directly into the gasifier unit or be installed directly downstream of the gasifier to effect the process.

It is obvious that the foregoing embodiments of the invention are examples and can be varied in many ways.

## Claims

1. A continuous multi-stage vertically sequenced gasification process for conversion of solid carbonaceous fuel material into low tar syngas in a gasifier comprising:
i) a pyrolysis zone (20),
ii) a partial oxidation zone (30) located vertically downstream of the pyrolysis zone (20), and separated from the pyrolysis zone via a separation member (32) comprising a plurality of upwardly angled vents (34);
iii) a reduction zone (40) located vertically downstream of the partial oxidation zone and comprising an angled perforated floor (42), one or more openings (46) located centrally relative to the perforated floor, and a centrally located deflector (48); **characterized in that** the floor being sloped downward and inward toward the one or more openings, wherein the perforated floor is configured, by sizing of perforations (44) therein, to primarily allow passage of syngas (49) therethrough, and to inhibit passage of the pyrolysis residue (24) obtainable in the pyrolysis zone, wherein the slope of the perforated floor is greater than zero degrees and less than 60 degrees;
said process comprising the steps of:
a) feeding the carbonaceous fuel material (16) through the upper portion of the pyrolysis zone vertically downward towards the lower portion of the pyrolysis zone, while pyrolyzing the fuel into pyrolysis vapours (26) comprising hydrocarbon material, and raw pyrolysis residue (24) comprising char and ash;
b) optionally adding a first oxidant (22) to the lower portion of the pyrolysis zone to achieve a temperature greater than 200 °C;
c) directing the pyrolysis vapours (26) to the partial oxidation (POX) zone, and directing the pyrolysis residue downwardly to the reduction zone via the separation member, wherein the vents of the separation member are upwardly angled to allow the pyrolysis vapours into the partial oxidation zone, and to inhibit passage of the raw pyrolysis residue into the partial oxidation zone ;
d) adding a second oxidant (36) in the partial oxidation zone to achieve a temperature sufficient to reform the pyrolysis vapours into raw syngas containing significantly reduced levels of tar;
e) forming a pyrolysis residue bed (28) having a uniform depth from the raw pyrolysis residue formed in step c) on the floor of the reduction zone;
f) passing the raw syngas (38) from step d) downward through the raw pyrolysis residue bed formed in step e), and carrying out an endothermic reaction between CO₂ and/or H₂O in the raw syngas and carbon of the char in the pyrolysis residue bed, while controlling the reduction zone pressure drop, resident time and flow space velocity of the raw syngas during the endothermic reaction to form substantially tar free syngas (49) and a decarbonized pyrolysis residue (52);
g) passing the substantially tar free syngas from step f), in upward counter-current flow, to heat the pyrolysis zone and subsequently cool the substantially tar free syngas;
h) collecting the substantially tar free syngas; and
i) collecting the decarbonized pyrolysis residue from the bottom of gasifier.

2. The process of claim 1, wherein the process is carried out under pressure, less than Z 42,4 bar (600 psig), preferably between atmospheric pressure and 7,9 bar (100 psig).

3. The process of claim 1 or 2 wherein the carbonaceous fuel material comprises biomass fuel selected from wood chips, railway tie chips, waste wood, forestry waste, sewage sludge, pet coke, coal, Municipal Solid Waste (MSW), Refuse-derived Fuel (RDF), or any combination.

4. The process of claim 3, wherein the biomass fuel is formed by a chipping, shredding, extrusion, mechanical processing, compacting, pelletizing, granulating, or crushing process.

5. The process of claim 3 or 4, where the biofuel has been sprayed with, coated with or impregnated with liquid or solid carbonaceous materials.

6. The process of any one of claims 1 to 5, wherein the POX stage temperature is greater than 1250 °C, or greater than the ash fusion temperature to create liquid slag.

7. The process of any one of claims 1 to 6, wherein the first and the second oxidant comprises air, enriched air, oxygen with purity greater than 85wt%, oxygen with purity greater than 95wt%, or a combination thereof.

8. The process of claim 7, wherein the first oxidant and the second oxidant are same.

9. The process of claim 7, wherein the first oxidant and the second oxidant are different.

10. The process of claim 8, wherein the first oxidant and/or the second oxidant further comprises H₂O and/or CO₂.

11. The process of claim 10, wherein the first oxidant comprises air, enriched air, oxygen with purity greater than 85wt%, oxygen with purity greater than 95wt%, or a combination thereof, and the second oxidant comprises at least one of air, enriched air, oxygen with purity greater than 85wt%, oxygen with purity greater than 95wt%, premixed with H₂O and/or CO₂.

12. The process of any one of claims 1 to 11, further comprising agitating and/or rotating the pyrolysis residue bed.

13. An apparatus for a continuous multi-stage vertically sequenced gasification process for conversion of solid carbonaceous fuel material into low tar syngas, the apparatus comprising:
i) a pyrolysis zone (20) for converting the fuel into pyrolysis vapours comprising hydrocarbon material, and carbon rich raw pyrolysis residue comprising char and ash;
ii) a partial oxidation zone (30) located vertically downstream of the pyrolysis zone for conversion of the hydrocarbon material in the pyrolysis vapours into raw syngas comprising H₂, CO and CO₂ and having at least one inlet for receiving one or more oxidants;
iii) an endothermic reduction zone (40) located vertically downstream of the partial oxidation zone for converting the raw syngas (38) into substantially tar free syngas (49) and for reducing carbon content of the raw pyrolysis residue to obtain decarbonized pyrolysis residue (52);
iv) a separation member (32) located between the pyrolysis zone and the partial oxidation zone, the separation member comprising a plurality of upwardly angled vents (34) to allow the pyrolysis vapours (26) into the partial oxidation zone and to inhibit passage of the raw pyrolysis residue (24) into the partial oxidation zone, and the separation member being configured to direct the pyrolysis residue into the reduction zone;
v) an outlet port (56) for the decarbonized pyrolysis residue (52), located downstream of the reduction zone;
vi) an outlet (50) for the substantially tar free syngas located downstream of the reduction zone;
vii) the reduction zone comprising an angled perforated floor (42), one or more openings (46) located centrally relative to the perforated floor, and a centrally located deflector (48),
**characterized in that**: the floor being sloped downward and inward toward the one or more openings, and the perforations (44) are sized to allow primarily passage of the syngas therethrough towards the outlet for the substantially tar free syngas and to inhibit passage of the raw pyrolysis residue, and the one or more openings being in fluidic communication with the outlet port (56), and configured for passage of the decarbonized pyrolysis residue (52) therethrough;
wherein the slope of the perforated floor is greater than zero degrees and less than 60 degrees.

14. The apparatus of claim 13, further comprising a first mechanism in communication with the reduction zone, configured to intermittently or continuously move pyrolysis residue from the perforated floor towards the one or more openings.

15. The apparatus of claim 14, wherein the mechanism comprises a pushing body configured to move along a path around the deflector, the pushing body located proximate to the perforated floor and outward from the one or more openings.

16. The apparatus of claim 15, wherein the pushing body comprises one or more arms extending radially outwardly relative to the one or more openings.

17. The apparatus of claim 16, wherein the arms have angled face configured to contact and push a portion of the pyrolysis residue toward the one or more openings during motion of the pushing body.

18. The apparatus of any one of claims 15 to 17, further comprising a controller configured to operate the mechanism depending on a pressure differential measured at a location before the pyrolysis residue bed and a location after the perforated floor.

19. The apparatus of any one of claims 13 to 18, further comprising a second mechanism to push the decarbonized pyrolysis residue from the lower bed toward the outlet ports.

20. The apparatus of claim 19, wherein the first and second mechanisms operate independently of each other.

21. The apparatus of any one of claims 13 to 20, wherein the pyrolysis zone, the partial oxidation zone and the reduction zone are located within one container/chamber.

22. The apparatus of any one of claims 13 to 21, further comprising an outer shell having a shell inlet in communication with the syngas outlet, and a shell outlet, wherein the outer shell encircles/surrounds the pyrolysis zone, the partial oxidation zone and the reduction zone to form a channel for flow of the syngas toward the shell outlet.

23. The apparatus of any one of claims 13 to 22, wherein the shell outlet is provided on an upper portion of the shell to allow the syngas to move upward in the channel to provide indirect thermal contact between the syngas and the pyrolysis zone.

24. The apparatus of any one of claims 13 to 23, wherein the pyrolysis zone, the partial oxidation zone and the reduction zone are located in separate containers/chambers.

25. The apparatus of any one of claims 13 to 24, wherein the perimeter of the lower portion of the pyrolysis zone is greater than the perimeter of the upper portion.

26. The apparatus of any one of claims 13 to 25, wherein the floor of the reduction zone is configured to be agitated.

## Patentansprüche

1. Ein kontinuierliches, mehrstufiges, vertikal sequenziertes Vergasungsverfahren zur Umwandlung von festem, kohlenstoffhaltigem Brennstoffmaterial in teerarmes Synthesegas in einem Vergaser der umfasst:
i) eine Pyrolysezone (20),
ii) eine partielle Oxidationszone (30), die sich vertikal stromabwärts der Pyrolysezone (20) befindet und von der Pyrolysezone durch ein Trennelement (32) getrennt ist umfassend eine Vielzahl von nach oben abgewinkelten Entlüftungsöffnungen (34);
iii) eine Reduktionszone (40), die sich vertikal stromabwärts der partiellen Oxidationszone befindet und einen abgewinkelten perforierten Boden (42), eine oder mehrere Öffnungen (46), die mittig in Bezug auf den perforierten Boden angeordnet sind, und einen zentral angeordneten Deflektor (48) umfasst; **dadurch gekennzeichnet, dass** der Boden nach unten und nach innen zu der einen oder den mehreren Öffnungen hin geneigt ist, wobei der perforierte Boden durch die Größe der darin befindlichen Perforationen (44) konfiguriert ist,
um primär den Durchgang von Synthesegas (49) zu ermöglichen und den Durchgang des Pyrolyserückstand (24), der in der Pyrolysezone erhältlich ist, zu inhibieren, wobei die Neigung des perforierten Bodens größer als null Grad und kleiner als 60 Grad ist;
wobei dieses Verfahren die folgenden Schritte umfasst:
a) Zuführen des kohlenstoffhaltigen Brennstoffmaterials (16) durch den oberen Teil der Pyrolysezone vertikal nach unten in Richtung des unteren Teils der Pyrolysezone, wobei der Brennstoff zu Pyrolysedämpfen (26) pyrolysiert wird, welche Kohlenwasserstoffmaterial und Rohpyrolyserückstand (24), welcher Holzkohle und Asche enthält, umfasst;
b) optional Zugabe eines ersten Oxidationsmittels (22) in den unteren Teil der Pyrolysezone, um eine Temperatur von mehr als 200 °C erreichen;
c) Leiten der Pyrolysedämpfe (26) zur Zone der partiellen Oxidation (POX) und Leiten des Pyrolyserückstands nach unten zur Reduktionszone über das Trennelement, wobei die Entlüftungsöffnungen des Trennelements nach oben gerichtet sind so abgewinkelt, dass die Pyrolysedämpfe in die Zone der partiellen Oxidation gelangen können und der Durchgang des Rohpyrolyserückstands in die Zone der partiellen Oxidation inhibiert wird;
d) Zugabe eines zweiten Oxidationsmittels (36) in die partiellen Oxidationszone, um eine Temperatur zu erreichen, die ausreicht, um die Pyrolysedämpfe zu rohem Synthesegas mit deutlich reduziertem Teergehalt umzuwandeln;
e) Bildung eines Pyrolyserückstandsbettes (28) mit gleichmäßiger Tiefe aus dem in Schritt c) gebildeten Rohpyrolyserückstand auf dem Boden der Reduktionszone;
f) Durchleiten des rohen Synthesegases (38) aus Schritt d) nach unten durch das in Schritt e) gebildete Rohpyrolyserückstandsbett und Durchführen einer endothermen Reaktion zwischen CO₂ und/oder H₂O im rohen Synthesegas und dem Kohlenstoff der Holzkohle im Pyrolyserückstandsbett, wobei der Druckabfall in der Reduktionszone, die Verweilzeit und die Strömungsgeschwindigkeit des rohen Synthesegases während der endothermen Reaktion kontrolliert werden, um ein im Wesentlichen teerfreies Synthesegas (49) und einen dekarbonisierten Pyrolyserückstand (52) zu bilden;
g) Durchleiten des im Wesentlichen teerfreien Synthesegases aus Schritt f) im aufwärts gerichteten Gegenstrom, um die Pyrolysezone zu erhitzen und anschließend das im Wesentlichen teerfreie Synthesegas zu kühlen;
h) Sammeln des im Wesentlichen teerfreien Synthesegases; und
i) Auffangen des dekarbonisierten Pyrolyserückstands vom Boden des Vergasers.

2. Verfahren nach Anspruch 1, wobei das Verfahren unter Druck durchgeführt wird, der geringer ist als 42,4 bar (600 psig), vorzugsweise zwischen atmosphärischem Druck und 7,9 bar (100 psig).

3. Verfahren nach Anspruch 1 oder 2, wobei das kohlenstoffhaltige Brennstoffmaterial einen Biomassebrennstoff umfasst, der aus Holzschnitzeln, Eisenbahnschwellenschnitzeln, Holzabfällen, forstwirtschaftlichen Abfällen, Klärschlamm, Petrolkoks, Kohle, kommunalem Festmüll (MSW), aus Abfall gewonnenem Brennstoff (RDF) oder einer beliebigen Kombination ausgewählt ist.

4. Verfahren nach Anspruch 3, wobei der Biomassebrennstoff durch Zerkleinern, Schreddern, Extrudieren, mechanische Verarbeitung, Verdichten, Pelletieren, Granulieren oder Zerkleinern hergestellt wird.

5. Verfahren nach Anspruch 3 oder 4, wobei der Biokraftstoff mit flüssigen oder festen kohlenstoffhaltigen Materialien besprüht, beschichtet oder imprägniert wurde.

6. Verfahren nach einem der Ansprüche 1 bis 5, wobei die Temperatur in der POX-Stufe höher als 1250 °C oder höher als die Aschefusionstemperatur zur Erzeugung flüssiger Schlacke ist.

7. Verfahren nach einem der Ansprüche 1 bis 6, wobei das erste und das zweite Oxidationsmittel Luft, angereicherte Luft, Sauerstoff mit einem Reinheitsgrad von mehr als 85 Gew.-%, Sauerstoff mit einem Reinheitsgrad von mehr als 95 Gew.-% oder eine Kombination davon umfasst.

8. Verfahren nach Anspruch 7, wobei das erste Oxidationsmittel und das zweite Oxidationsmittel gleich sind.

9. Verfahren nach Anspruch 7, wobei das erste Oxidationsmittel und das zweite Oxidationsmittel unterschiedlich sind.

10. Verfahren nach Anspruch 8, wobei das erste Oxidationsmittel und/oder das zweite Oxidationsmittel ferner H₂O und/oder CO₂ umfasst.

11. Verfahren nach Anspruch 10, wobei das erste Oxidationsmittel Luft, angereicherte Luft, Sauerstoff mit einer Reinheit von mehr als 85 Gew.-%, Sauerstoff mit einer Reinheit von mehr als 95 Gew.-% oder eine Kombination davon umfasst, und das zweite Oxidationsmittel mindestens eines von Luft, angereicherter Luft, Sauerstoff mit einer Reinheit von mehr als 85 Gew.-%, Sauerstoff mit einer Reinheit von mehr als 95 Gew.-%, vorgemischt mit H₂O und/oder CO₂ umfasst.

12. Verfahren nach einem der Ansprüche 1 bis 11, bei dem das Pyrolyserückstandsbett außerdem agitiert und/oder rotiert wird.

13. Vorrichtung für ein kontinuierliches, mehrstufiges, vertikal sequenziertes Vergasungsverfahren zur Umwandlung von festem, kohlenstoffhaltigem Brennstoffmaterial in teerarmes Synthesegas, wobei die Vorrichtung Folgendes umfasst:
i) eine Pyrolysezone (20) zur Umwandlung des Brennstoffs in Pyrolysedämpfe, welche Kohlenwasserstoffmaterial und kohlenstoffreichen Rohpyrolyserückstand, bestehend aus Holzkohle und Asche, umfasst;
ii) eine partielle Oxidationszone (30), die vertikal stromabwärts der Pyrolysezone angeordnet ist, zur Umwandlung des Kohlenwasserstoffmaterials in den Pyrolysedämpfen in rohes Synthesegas, das H₂, CO und CO₂ enthält, und die mindestens einen Einlass zur Aufnahme eines oder mehrerer Oxidationsmittel aufweist;
iii) eine endotherme Reduktionszone (40), die vertikal stromabwärts der partiellen Oxidationszone angeordnet ist, um das rohe Synthesegas (38) in ein im Wesentlichen teerfreies Synthesegas (49) umzuwandeln und um den Kohlenstoffgehalt des rohen Pyrolyserückstands zu reduzieren, um einen dekarbonisierten Pyrolyserückstand (52) zu erhalten;
iv) ein Trennelement (32), das zwischen der Pyrolysezone und der partiellen Oxidationszone angeordnet ist, wobei das Trennelement eine Vielzahl von nach oben gewinkelten Entlüftungsöffnungen (34) umfasst, um die Pyrolysedämpfe (26) in die partielle Oxidationszone eintreten zu lassen und den Durchgang des rohen Pyrolyserückstands (24) in die partielle Oxidationszone zu inhibieren, und das Trennelement so konfiguriert ist, dass es den Pyrolyserückstand in die Reduktionszone leitet;
v) eine Auslassöffnung (56) für den dekarbonisierten Pyrolyserest (52), die sich stromabwärts der Reduktionszone befindet;
vi) einen Auslass (50) für das im Wesentlichen teerfreie Synthesegas, der sich stromabwärts der Reduktionszone befindet;
vii) wobei die Reduktionszone einen abgewinkelten perforierten Boden (42), eine oder mehrere Öffnungen (46), die zentral relativ zu dem perforierten Boden angeordnet sind, und einen zentral angeordneten Deflektor (48) umfasst, **dadurch gekennzeichnet, dass**: der Boden nach unten und nach innen zu der einen oder den mehreren Öffnungen hin geneigt ist und die Perforationen (44) so bemessen sind, dass sie primär den Durchgang des Synthesegases durch sie in Richtung des Auslasses für das im Wesentlichen teerfreie Synthesegas ermöglichen und den Durchgang des rohen Pyrolyserückstands inhibiert, und die eine oder die mehreren Öffnungen in Fluidverbindung mit der Auslassöffnung (56) stehen und für den Durchgang des dekarbonisierten Pyrolyserückstands (52) durch sie konfiguriert sind;
wobei die Neigung des perforierten Bodens größer als null Grad und kleiner als 60 Grad ist.

14. Vorrichtung nach Anspruch 13, die außerdem einen ersten Mechanismus umfasst, der in Verbindung steht mit der Reduktionszone, die so konfiguriert ist, dass sie Pyrolyserückstände intermittierend oder kontinuierlich vom perforierten Boden in Richtung der einen oder mehreren Öffnungen bewegt.

15. Vorrichtung nach Anspruch 14, wobei der Mechanismus einen Schubkörper umfasst, der so konfiguriert ist, dass er sich entlang einer Bahn um den Deflektor bewegt, wobei der Schubkörper in der Nähe des perforierten Bodens und außerhalb der einen oder mehreren Öffnungen angeordnet ist.

16. Vorrichtung nach Anspruch 15, wobei der Schubkörper einen oder mehrere Arme umfasst die sich in Bezug auf die eine oder mehrere Öffnungen radial nach außen erstrecken.

17. Vorrichtung nach Anspruch 16, bei der die Arme eine abgewinkelte Fläche haben, die so konfiguriert ist, dass sie einen Teil des Pyrolyserückstands berührt und während der Bewegung des Schubkörpers in Richtung der einen oder mehreren Öffnung schiebt.

18. Die Vorrichtung nach einem der Ansprüche 15 bis 17, weiterhin umfassend eine Steuerung, die so konfiguriert ist, dass sie den Mechanismus in Abhängigkeit von einem Druckunterschied betätigt, der an einer Stelle vor dem Pyrolyserückstandsbett und an einer Stelle nach dem perforierten Boden gemessen wird.

19. Die Vorrichtung nach einem der Ansprüche 13 bis 18 umfasst außerdem einen zweiten Mechanismus um den dekarbonisierten Pyrolyserückstand aus dem unteren Bett zu den Auslassöffnungen schieben.

20. Vorrichtung nach Anspruch 19, wobei der erste und der zweite Mechanismus unabhängig voneinander arbeiten.

21. Vorrichtung nach einem der Ansprüche 13 bis 20, wobei die Pyrolysezone, die partielle Oxidationszone und die Reduktionszone in einem Behälter/einer Kammer angeordnet sind.

22. Vorrichtung nach einem der Ansprüche 13 bis 21, weiterhin umfassend eine äußere Hülle mit einem Hülleneinlass, der mit dem Synthesegasauslass in Verbindung steht, und einen Hüllenauslass, wobei die äußere Hülle die Pyrolysezone, die partielle Oxidationszone und die Reduktionszone umranded/umgibt, um einen Kanal für einen Fluss des Synthesegases zum Hüllenauslass zu bilden.

23. Vorrichtung nach einem der Ansprüche 13 bis 22, wobei der Hüllenauslass an einem oberen Teil der Hülle vorgesehen ist, damit sich das Synthesegas im Kanal nach oben bewegen kann, um einen indirekten Wärmekontakt zwischen dem Synthesegas und der Pyrolysezone herzustellen.

24. Vorrichtung nach einem der Ansprüche 13 bis 23, wobei die Pyrolysezone, die partielle Oxidationszone und die Reduktionszone in getrennten Behältern/Kammern angeordnet sind.

25. Die Vorrichtung nach einem der Ansprüche 13 bis 24, bei der der Umfang des unteren Teils der der Pyrolysezone größer ist als der Umfang des oberen Teils.

26. Vorrichtung nach einem der Ansprüche 13 bis 25, bei der der Boden der Reduktionszone so konfiguriert ist, dass er agitiert wird.

## Revendications

1. Procédé de gazéification à séquençage vertical à plusieurs étages en continu pour la conversion d'une matière combustible carbonée solide en gaz de synthèse à faible teneur en goudrons dans un gazéifieur comprenant :
i) une zone de pyrolyse (20),
ii) une zone d'oxydation partielle (30) située verticalement en aval de la zone de pyrolyse (20), et séparée de la zone de pyrolyse par un organe de séparation (32) comprenant une pluralité d'évents (34) inclinés vers le haut ;
iii) une zone de réduction (40) située verticalement en aval de la zone d'oxydation partielle et comprenant un plancher perforé incliné (42), une ou plusieurs ouvertures (46) situées au centre par rapport au plancher perforé, et un déflecteur (48) situé au centre ;
**caractérisé en ce que** le plancher est en pente vers le bas et vers l'intérieur vers les une ou plusieurs ouvertures, dans lequel le plancher perforé est configuré, par le dimensionnement des perforations (44) se trouvant dans celui-ci, pour permettre principalement le passage d'un gaz de synthèse (49) à travers celui-ci, et pour empêcher le passage du résidu de pyrolyse (24) pouvant être obtenu dans la zone de pyrolyse, dans lequel la pente du plancher perforé est supérieure à zéro degré et inférieure à 60 degrés ;
ledit procédé comprenant les étapes suivantes :
a) l'introduction de la matière combustible carbonée (16) à travers la partie supérieure de la zone de pyrolyse verticalement vers le bas vers la partie inférieure de la zone de pyrolyse, tout en pyrolysant le combustible en vapeurs de pyrolyse (26) comprenant une matière hydrocarbonée, et un résidu brut de pyrolyse (24) comprenant des résidus de carbonisation et des cendres ;
b) facultativement l'ajout d'un premier oxydant (22) à la partie inférieure de la zone de pyrolyse pour atteindre une température supérieure à 200 °C ;
c) l'acheminement des vapeurs de pyrolyse (26) vers la zone d'oxydation partielle (POX), et l'acheminement du résidu de pyrolyse vers le bas vers la zone de réduction via l'organe de séparation, dans lequel les évents de l'organe de séparation sont inclinés vers le haut pour permettre aux vapeurs de pyrolyse d'entrer dans la zone d'oxydation partielle, et pour empêcher le passage du résidu brut de pyrolyse dans la zone d'oxydation partielle ;
d) l'ajout d'un second oxydant (36) dans la zone d'oxydation partielle pour atteindre une température suffisante pour reformer les vapeurs de pyrolyse en gaz de synthèse brut contenant des niveaux de goudrons significativement réduits ;
e) la formation d'un lit de résidu de pyrolyse (28) ayant une profondeur uniforme à partir du résidu brut de pyrolyse formé dans l'étape c) sur le plancher de la zone de réduction ;
f) le passage du gaz de synthèse brut (38) de l'étape d) vers le bas à travers le lit de résidu brut de pyrolyse formé dans l'étape e), et la mise en œuvre d'une réaction endothermique entre le CO₂ et/ou le H₂O dans le gaz de synthèse brut et le carbone des résidus de carbonisation dans le lit de résidu de pyrolyse, tout en régulant la chute de pression dans la zone de réduction, le temps de séjour et la vitesse spatiale d'écoulement du gaz de synthèse brut pendant la réaction endothermique pour former un gaz de synthèse (49) sensiblement exempt de goudrons et un résidu de pyrolyse décarboné (52) ;
g) le passage du gaz de synthèse sensiblement exempt de goudrons de l'étape f), dans un écoulement à contre-courant ascendant, pour chauffer la zone de pyrolyse et ensuite refroidir le gaz de synthèse sensiblement exempt de goudrons ;
h) la collecte du gaz de synthèse sensiblement exempt de goudrons ; et
i) la collecte du résidu de pyrolyse décarboné à partir du fond du gazéifieur.

2. Procédé selon la revendication 1, dans lequel le procédé est réalisé sous pression, inférieure à 42,4 bar (600 psig)
de préférence entre la pression atmosphérique et 7,9 bar (100 psig).

3. Procédé selon la revendication 1 ou 2, dans lequel la matière combustible carbonée comprend un combustible de biomasse sélectionné parmi les copeaux de bois, les copeaux de traverses de chemin de fer, les déchets de bois, les déchets forestiers, les boues d'épuration, le coke de pétrole, le charbon, les déchets solides municipaux (MSW), les combustibles dérivés de déchets (CDD), ou n'importe quelle combinaison.

4. Procédé selon la revendication 3, dans lequel le combustible de biomasse est formé par un procédé de déchiquetage, de dilacération, d'extrusion, de traitement mécanique, de compactage, de formation de pastilles, de granulation ou de concassage.

5. Procédé selon la revendication 3 ou 4, dans lequel le biocarburant a été pulvérisé, enduit ou imprégné avec des matières carbonées liquides ou solides.

6. Procédé selon l'une quelconque des revendications 1 à 5, dans lequel la température de l'étage POX est supérieure à 1250 °C, ou supérieure à la température de fusion des cendres pour créer un mâchefer liquide.

7. Procédé selon l'une quelconque des revendications 1 à 6, dans lequel le premier et le second oxydant comprennent de l'air, de l'air enrichi, de l'oxygène ayant une pureté supérieure à 85 % en poids, de l'oxygène ayant une pureté supérieure à 95 % en poids, ou une combinaison de ceux-ci.

8. Procédé selon la revendication 7, dans lequel le premier oxydant et le second oxydant sont identiques.

9. Procédé selon la revendication 7, dans lequel le premier oxydant et le second oxydant sont différents.

10. Procédé selon la revendication 8, dans lequel le premier oxydant et/ou le second oxydant comprennent en outre du H₂O et/ou du CO₂.

11. Procédé selon la revendication 10, dans lequel le premier oxydant comprend de l'air, de l'air enrichi, de l'oxygène ayant une pureté supérieure à 85 % en poids, de l'oxygène ayant une pureté supérieure à 95 % en poids, ou une combinaison de ceux-ci, et le second oxydant comprend au moins l'un parmi de l'air, de l'air enrichi, de l'oxygène ayant une pureté supérieure à 85 % en poids, de l'oxygène ayant une pureté supérieure à 95 % en poids, prémélangé avec du H₂O et/ou du CO₂.

12. Procédé selon l'une quelconque des revendications 1 à 11, comprenant en outre l'agitation et/ou la rotation du lit de résidu de pyrolyse.

13. Appareil pour un procédé de gazéification à séquençage vertical à plusieurs étages en continu pour la conversion d'une matière combustible carbonée solide en gaz de synthèse à faible teneur en goudrons, l'appareil comprenant :
i) une zone de pyrolyse (20) pour convertir le combustible en vapeurs de pyrolyse comprenant une matière hydrocarbonée, et un résidu brut de pyrolyse riche en carbone comprenant des résidus de carbonisation et des cendres ;
ii) une zone d'oxydation partielle (30) située verticalement en aval de la zone de pyrolyse pour la conversion de la matière hydrocarbonée dans les vapeurs de pyrolyse en gaz de synthèse brut comprenant du H₂, CO et CO₂ et ayant au moins une entrée pour recevoir un ou plusieurs oxydants ;
iii) une zone de réduction endothermique (40) située verticalement en aval de la zone d'oxydation partielle pour convertir le gaz de synthèse brut (38) en gaz de synthèse (49) sensiblement exempt de goudrons et pour réduire la teneur en carbone du résidu brut de pyrolyse afin d'obtenir un résidu de pyrolyse décarboné (52) ;
iv) un organe de séparation (32) situé entre la zone de pyrolyse et la zone d'oxydation partielle, l'organe de séparation comprenant une pluralité d'évents (34) inclinés vers le haut pour permettre aux vapeurs de pyrolyse (26) d'entrer dans la zone d'oxydation partielle et pour empêcher le passage du résidu brut de pyrolyse (24) dans la zone d'oxydation partielle, et l'organe de séparation étant configuré pour diriger le résidu de pyrolyse dans la zone de réduction ;
v) un orifice de sortie (56) pour le résidu de pyrolyse décarboné (52), situé en aval de la zone de réduction ;
vi) une sortie (50) pour le gaz de synthèse sensiblement exempt de goudrons située en aval de la zone de réduction ;
vii) la zone de réduction comprenant un plancher perforé incliné (42), une ou plusieurs ouvertures (46) situées au centre par rapport au plancher perforé, et un déflecteur (48) situé au centre,
**caractérisé en ce que** : le plancher est en pente vers le bas et vers l'intérieur vers les une ou plusieurs ouvertures, et les perforations (44) sont dimensionnées pour permettre principalement le passage du gaz de synthèse à travers celles-ci vers la sortie pour le gaz de synthèse sensiblement exempt de goudrons et pour empêcher le passage du résidu brut de pyrolyse, et les une ou plusieurs ouvertures sont en communication fluidique avec l'orifice de sortie (56), et configurées pour le passage du résidu de pyrolyse décarboné (52) à travers celles-ci ;
dans lequel la pente du plancher perforé est supérieure à zéro degré et inférieure à 60 degrés.

14. Appareil selon la revendication 13, comprenant en outre un premier mécanisme en communication avec la zone de réduction, configuré pour déplacer par intermittence ou en continu le résidu de pyrolyse à partir du plancher perforé vers les une ou plusieurs ouvertures.

15. Appareil selon la revendication 14, dans lequel le mécanisme comprend un corps de poussée configuré pour se déplacer le long d'un trajet autour du déflecteur, le corps de poussée étant situé à proximité du plancher perforé et vers l'extérieur à partir des une ou plusieurs ouvertures.

16. Appareil selon la revendication 15, dans lequel le corps de poussée comprend un ou plusieurs bras s'étendant radialement vers l'extérieur par rapport aux une ou plusieurs ouvertures.

17. Appareil selon la revendication 16, dans lequel les bras ont une face inclinée configurée pour entrer en contact avec et pousser une partie du résidu de pyrolyse vers les une ou plusieurs ouvertures lors du déplacement du corps de poussée.

18. Appareil selon l'une quelconque des revendications 15 à 17, comprenant en outre un dispositif de commande configuré pour actionner le mécanisme en fonction d'une différence de pression mesurée à un emplacement avant le lit de résidu de pyrolyse et à un emplacement après le plancher perforé.

19. Appareil selon l'une quelconque des revendications 13 à 18, comprenant en outre un second mécanisme pour pousser le résidu de pyrolyse décarboné à partir du lit inférieur vers les orifices de sortie.

20. Appareil selon la revendication 19, dans lequel les premier et second mécanismes peuvent fonctionner indépendamment l'un de l'autre.

21. Appareil selon l'une quelconque des revendications 13 à 20, dans lequel la zone de pyrolyse, la zone d'oxydation partielle et la zone de réduction sont situées à l'intérieur d'un récipient/d'une chambre.

22. Appareil selon l'une quelconque des revendications 13 à 21, comprenant en outre une enveloppe externe ayant une entrée d'enveloppe en communication avec la sortie de gaz de synthèse, et une sortie d'enveloppe, dans lequel l'enveloppe externe encercle/entoure la zone de pyrolyse, la zone d'oxydation partielle et la zone de réduction pour former un canal pour l'écoulement du gaz de synthèse vers la sortie d'enveloppe.

23. Appareil selon l'une quelconque des revendications 13 à 22, dans lequel la sortie d'enveloppe est fournie sur une partie supérieure de l'enveloppe pour permettre au gaz de synthèse de se déplacer vers le haut dans le canal pour fournir un contact thermique indirect entre le gaz de synthèse et la zone de pyrolyse.

24. Appareil selon l'une quelconque des revendications 13 à 23, dans lequel la zone de pyrolyse, la zone d'oxydation partielle et la zone de réduction sont situées dans des récipients/chambres séparé(e)s.

25. Appareil selon l'une quelconque des revendications 13 à 24, dans lequel le périmètre de la partie inférieure de la zone de pyrolyse est supérieur au périmètre de la partie supérieure.

26. Appareil selon l'une quelconque des revendications 13 à 25, dans lequel le plancher de la zone de réduction est configuré pour être agité.
